# EUROPEAN PATENT APPLICATION

(11) **EP 4 523 953 A2**
(43) Date of publication of application: **19.03.2025**
(21) Application number: 24200142.8
(22) Date of filing: 13.09.2024
(51) Int. Cl.: B60L 53/18, B60L 53/31, H02G 1/02, H02G 7/05, H02G 11/00

(54) **ELECTRIC VEHICLE CHARGER CABLE MANAGEMENT SYSTEM**

(30) Priority: 18.09.2023 US 202318369287
(71) Applicant: Eaton Intelligent Power Limited, Dublin 4 (IE)
(72) Inventor: Reese, Robert John, Edwardsville (US); Zanella, Mark F. JR., Georgetown (US); Katarki, Advait Madhusudan, Atlanta (US)
(74) Representative: Schwan Schorer & Partner mbB

(57) **Abstract**

An electric vehicle (EV) charger cable management system for use at an EV charging facility coupled to a power source via an EV charger is provided. The EV charger cable management system includes an EV charger cord set including an EV connector and an EV charger cable coupled to the EV connector; a bracket; and a junction box coupled to the EV charger cable and including electrical wirings, the junction box being structured to electrically connect the EV charger to the EV charger cord set via the electric wirings, be affixed to a portion of top surface of the EV charging facility via the bracket, and maintain a majority of the EV charger cord set to be suspended overhead and out of a path of a user or the EV.

## Description

### FIELD OF THE INVENTION:

The disclosed concept relates generally to an electric vehicle (EV) charger cable management system, and in particular, to an overhead EV charger cable management system for EV chargers.

### BACKGROUND OF THE INVENTION:

As the world transitions to sustainable and renewable energy, the demand for electric vehicles has recently increased significantly. For example, in 2022 EV sales grew by 65% while total new vehicle sales fell 8%. It is forecasted that 1 million or more EV sales will sell in the U.S. in 2023. As more and more entities transition to the EV, the demand for electric vehicle supply equipment (EVSE) has also increased significantly. An EVSE, also called an EV charging station, is an element in an infrastructure that supplies electric energy for the recharging of electric energy for the recharging of EVs, plug-in hybrid electric-gasoline vehicles, or semi-static and mobile electrical units such as exhibition stands. The 1996 NEC and California Article 625 define EVSE as being the conductors, including the ungrounded, grounded, and equipment grounding conductors, the electric vehicle connectors, attachment plugs, and all other fittings, devices, power outlets or apparatus installed specifically for the purpose of delivering energy from premises wiring to an electric vehicle. EVSE is defined by the Society of Automotive Engineers (SAE) recommended practice J1772 and the National Fire Protection Association (NFPA) National Electric Code (NEC) Article 625. While the NEC defines several safety requirements, J 1772 defines the physical conductive connection type, five pin functions (i.e., two power pins (Hot1 and Hot2 or neutral; or Line 1 and Line 2), one ground pin, one control pilot pin, and one proximity pin), the EVSE to EV handshake over the pilot pin, and how both parts (EVSE and EV) are supposed to function. Two-way communication seeks to ensure that the current passed to the EV is both below the limits of the EV can receive. There are additional safety features, such as a safety lock-out, that does not allow current to flow from the EV charging station until the EV connector or EV plug is physically inserted into the EV and the EV is ready to accept energy. For example, J1772 in North America uses a very simple but effective pilot circuit and handshake in the EVSE.

Conventional EVSEs consist of an EV charger (typically, included within a charging box) along with a connected EV cable/connector for the intended purpose of charging the EV. While a conventional EVSE requires a pedestal or wall-mounted EV charger with an RFID reader embedded in the EV charger, there are some EVSE that do not require such pedestal or wall-mounted EV charger. For example, an EV charger in a circuit breaker form factor may be installed in a power panel remotely located from the EVSE and the circuit-breaker based EV charger is coupled to a junction box located at a charging location (e.g., a parking lot, a residential garage, a charging station, etc.), the disconnect switch box including terminal blocks for the communication lines (e.g., a control pilot line, etc.). As such, an EVSE coupled to a circuit-breaker based EV charger does not have a standalone charging station. Rather, the EV charger is connected to the junction box, which can be used to connect or disconnect various switches coupled to the remotely located power panel (e.g., a power panel in a control room or a basement). The EV connector in turn is connected to the junction box via the EV charging cable. However, the EV charger cable is typically at least 7.5 meters (25 feet) long under the standards. Thus, the EV charger cable needs to be managed in an orderly manner such that the EV charger cable and the EV connector are not damaged before and after charging an EV.

There is room for improvement in EV charger cable management systems.

### SUMMARY OF THE INVENTION:

These needs, and others, are met by an electric vehicle (EV) charger cable management system for use at an EV charging facility coupled to a power source via an EV charger. The EV charger cable management system includes an EV charger cord set including an EV connector and an EV charger cable coupled to the EV connector; a bracket; and a junction box coupled to the EV charger cable and including electrical wirings, the junction box being structured to electrically connect the EV charger to the EV charger cord set via the electric wirings, be affixed to a portion of top surface of the EV charging facility via the bracket, and maintain a majority of the EV charger cord set to be suspended overhead and out of a path of a user or the EV.

Another example embodiment provides an EV charger cable management system for use at an EV charging facility coupled to a power source via an EV charger. The EV charger cable management system includes: an EV charger cord set including an EV connector and an EV charger cable coupled to the EV connector; a bracket; a junction box coupled to the EV charger cable and including electrical wirings, the junction box being structured to electrically connect the EV charger to the EV charger cord set via the electric wirings and be affixed to a first portion of top surface of the EV charging facility via the bracket; a retractor including a fixing component, a retractor cord and a cord grip attached to the retractor cord, the retractor being structured to be affixed to a second portion of the top surface at one end via the fixing component and to the retractor cord at another end, grip one end of a majority of the EV charger cord set via the cord grip, raise the EV connector to a first height for storage and lower the EV connector to a second height for charging; and a cord holder including a fixing component and a strain relief, the cord holder being structured to be affixed to a third portion of the top surface via the fixing component, wherein the junction box, the retractor and the cord holder together maintain the majority of the EV charger cord set to be suspended overhead and out of a path of the user and/or the EV via the strain relief.

Yet another example embodiment provides an EV charger cable management system for use at an EV charging facility coupled to a power source via an EV charger. The EV charger cable management system includes: an EV charger cord set including an EV connector and an EV charger cable coupled to the EV connector; a bracket; a junction box coupled to the EV charger cable and including electrical wirings, the junction box being structured to electrically connect the EV charger to the EV charger cord set via the electric wirings and be affixed to a first portion of top surface of the EV charging facility via the bracket; and a trolley system structured to maintain the EV charger cord set off the ground of the EV charging facility at all times, the trolley system including one or more trolleys structured to be affixed to another portion of the top surface in a series via fixing components, one or more trolly tracks each including wheels and being structured to travel away and toward the junction box via corresponding trolly tracks, one or more holding cords each attached to corresponding trolleys and extending downwardly, and one or more cord grips each attached to corresponding holding cords and structured to grip ends of corresponding holding portions, wherein the one or more trolleys, the one or more holding cords, the one or more cord grips and the junction box together hold a majority of the EV charger cord set at a predetermined height and maintain a remaining portion of the EV charger cord set including the EV connector to be suspended off the ground.

### BRIEF DESCRIPTION OF THE DRAWINGS:

A full understanding of the invention can be gained from the following description of the preferred embodiments when read in conjunction with the accompanying drawings in which:
Figures 1-1B illustrate an EV charging system having an EV charger cable management system disposed in a plurality of locations in accordance with a non-limiting example embodiments of the disclosed concept;
Figure 2-2D illustrates an exemplary EV charger cable management system in accordance with a non-limiting example embodiment of the disclosed concept;
Figure 3 illustrates a plurality of locations at a facility in which the EV charger cable management system may be disposed according to non-limiting, example embodiments of the disclosed concept;
Figures 4A-G illustrate exemplary EV charger cable management systems in accordance with non-limiting example embodiments of the disclosed concept; and
Figure 5 illustrates an exemplary EV charger cable management system in accordance with a non-limiting example embodiment of the disclosed concept.

### DETAILED DESCRIPTION OF THE INVENTION:

Directional phrases used herein, such as, for example, left, right, front, back, top, bottom and derivatives thereof, relate to the orientation of the elements shown in the drawings and are not limiting upon the claims unless expressly recited therein.

As employed herein, the statement that two or more parts are "coupled" together shall mean that the parts are joined together either directly or joined through one or more intermediate parts.

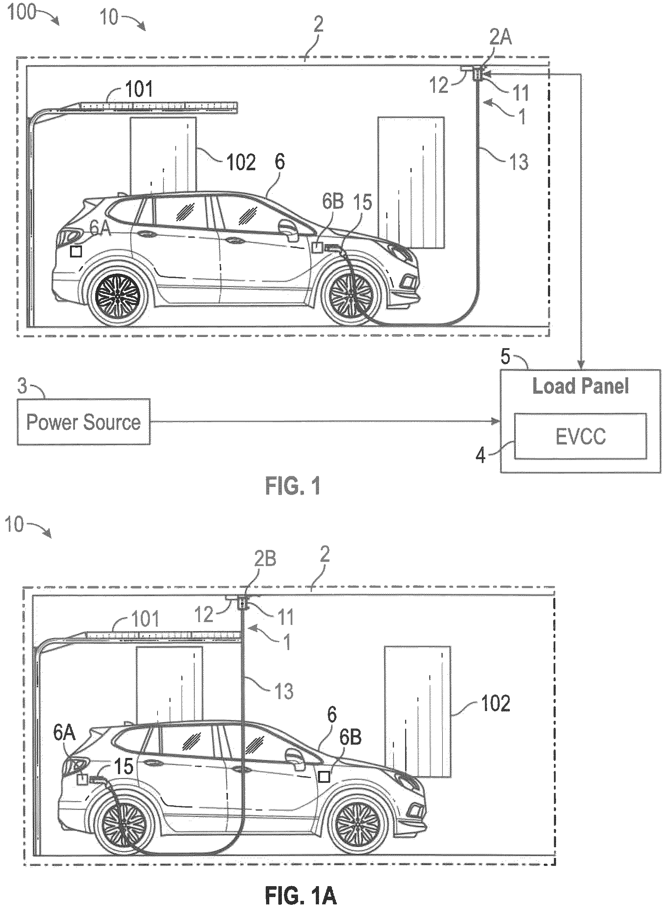

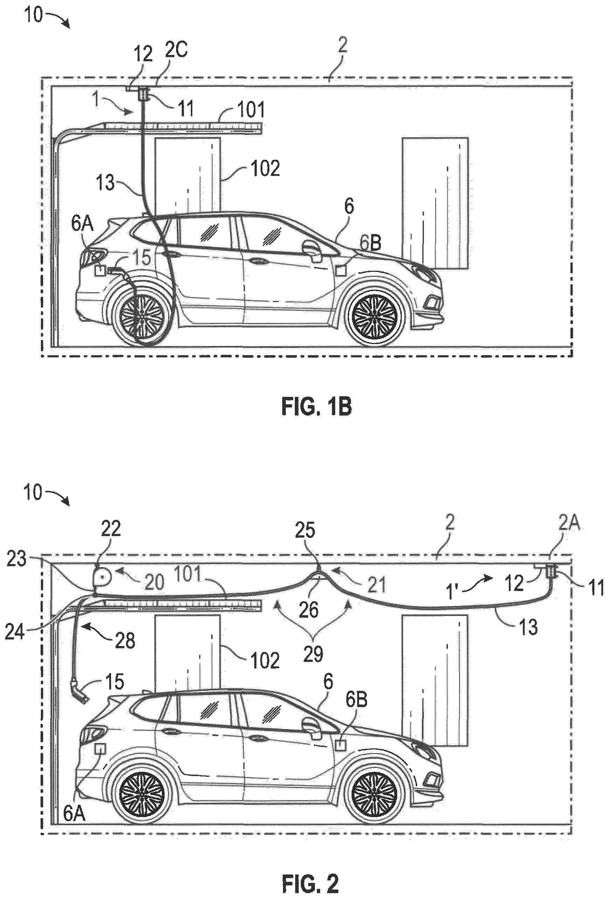

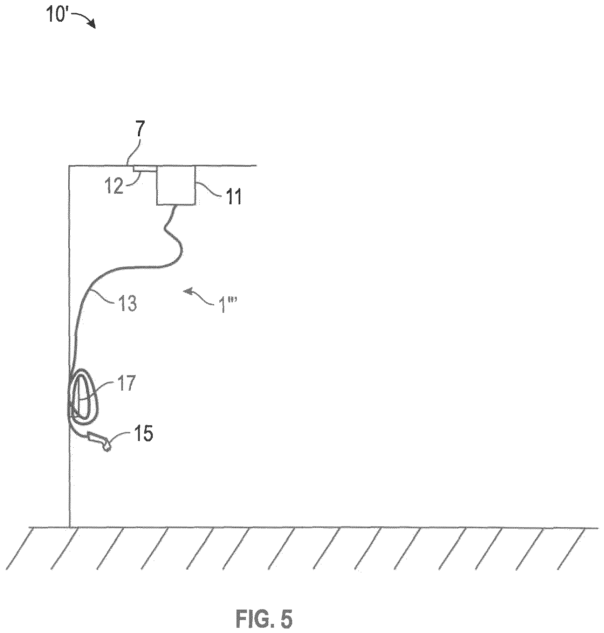

Figures 1-1B illustrate a power system 100 and an EV charger cable management system 1 disposed therein according to non-limiting, example embodiments of the disclosed concept. The power system 100 includes a power source 3, a power control system 5, an EV charging facility 10, and an EV charger cable management system 1. The power source 3 may be, e.g., without limitation, utility power source for supplying power to loads including an EV 6. The power source 3 is electrically connected to the power control system 5 (e.g., without limitation, a load panel). The load panel 5 may be located remotely or on site at the EV charging facility 10. The load panel 5 includes an EV charger 4 for charging an EV 6. The EV charger 4 may be an EV charger circuit breaker that can be installed in a remote load panel and structured to provide power for charging an EV 6 and interrupt current from flowing to the EV 6 in an event of a fault. The EV 6 may have a rear EV connector receptacle 6A or a front rear EV connector receptacle 6B. The EV charging facility 10 may be, e.g., without limitation, residential garages, commercial indoor parking lots, outdoor parking lots, etc. In Figures 1-4G, the EV charging facility 10 is a residential two-car garage including garage doors 101 and/or windows 102. Figure 5 includes an outdoor EV charging facility 10'.

The EV charger cable management system 1 includes a junction box 11, a bracket 12, and an EV charger cord set 13 and is structured to manage the EV charger cord set 13 during use and storage. The EV charger cord set 13 includes a standard EV charger cable 14 and a standard EV connector 15 coupled to the EV charger cable 14. The EV charger cable 14 has a length of 25ft in accordance with the standards. The junction box 11 is coupled to the EV charger cable 14 and includes electrical wirings (not shown). The junction box is structured to electrically connect the EV charger 4 to the EV charger cord set 13 via the electrical wirings. The electrical wirings include power lines and communication lines for supplying power to charge an EV 6 and communicate with the EV charger 4 and the EV 6 for charging, terminating the charging or interrupting current. Optionally, the EV charger circuit breaker 4 may be provided within the EV charger cable management system 1 and placed in the load panel 5 upon installation of the EV charger cable management system 1.

The junction box 11 is further structured to be affixed to (e.g., without limitation, mounted on, bolted to, etc.) a portion of a top surface (e.g., without limitation, of a ceiling 2) of the EV charging facility 10 via the bracket 12, and maintain a majority of the EV charger cord set 13 to be suspended overhead and out of a path or line of movement of a user, the public or an EV6 based on such affixing of the junction box 11 at the top surface of the EV charging facility 10. The junction box 11 is structured to be mounted on the ceiling 2 of the EV charging facility 10 via the bracket 12. As shown in Figures 1-4G, the junction box 11 can be affixed at any location of the ceiling 2 as appropriate. For example, in the residential two-car garage 10, the junction box 11 (as well as accessories such as trolleys or retractors, if any) can be affixed to the ceiling 2 at a location 2A behind a garage door 101 as shown in Figures 1, 2, 2C and 3. It may be affixed to the ceiling 2 at a location 2B behind a garage door 101 and to side of a garage door opener as shown in Figures 1A, 2A, 2C and 3. It may be affixed to the ceiling 2 at a location 2C between two parking spots as shown in Figures 1B, 2B, 3 and 4G. However, these locations are for the illustrative purposes only, and thus the junction box 11 (as well as the accessories, if any) can be affixed at other parts of the ceiling 2 depending on the needs and preferences of the user. In some examples, a holder (e.g., without limitation, a passive holding component) 17 may be utilized to hold a remaining portion (i.e., minority) of the EV charger cord set 13 including the EV connector 15 while the EV connector 15 is not connected to the EV 6 for charging.

In operation, the user reaches out and grabs the EV connector 15 from the passive holding component 17. The user next connects the EV connector 15 to the EV 6 for charging. Upon completion of the charging, the user then returns the EV connector 15 to the passive holding component 17 for storage.

The EV charger cable management system 1 is novel in that the conventional EVSEs (e.g., without limitation, EV charging stations or charge points) are installed on a wall or a pedestal, requiring the entirety of the EV charger cable and the connector to be wound on a hook disposed on the wall or the pedestal. Due to the required cable length (25ft from an EV charger) under the standards, the full length of the EV charger cable remains exposed to a path or line of movement of the user and/or the EV during use and storage, leaving the EV charging cord set exposed to damages or dirt and the user prone to tripping hazards. By affixing the junction box 11 to the ceiling 2 of the EV charging facility 10, the inventive EV charger cable management system 1 isolates the majority (e.g., more than one half of length of the EV charger cable 14) of the EV charger cable 14 and the EV connector 15 from the path or line of movement of the user and/or the EV 6, thereby safeguarding the EV charger cord set 13 from damages and protecting the user from any tripping hazards.

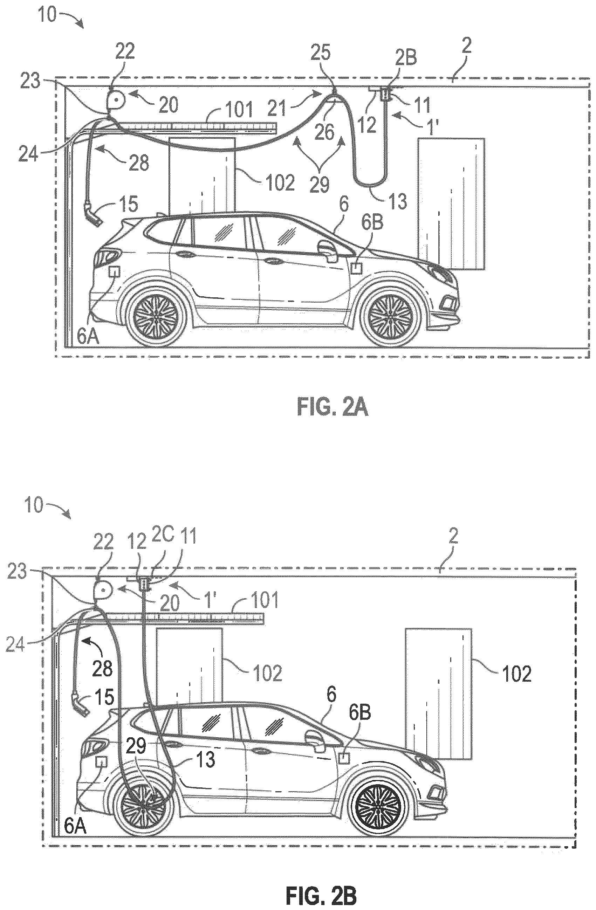

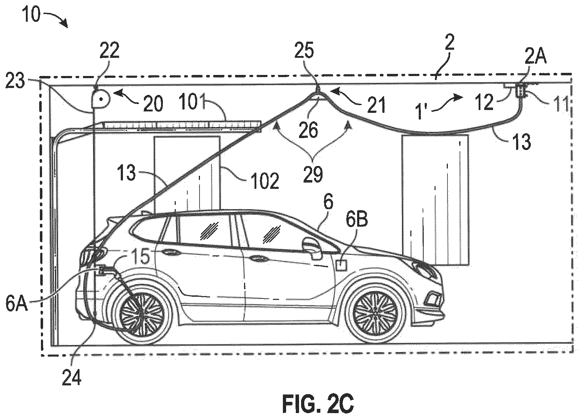

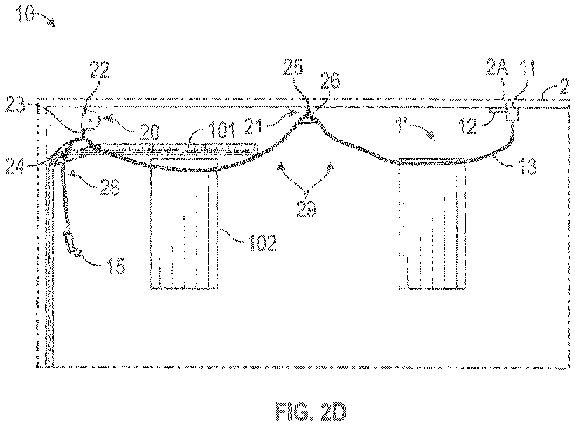

Further, by allowing the junction box 11 (and its accessories (e.g., a retractor 20, a trolley mechanism 30, etc. as shown in Figures 2-4G)) to be affixed at any part of the ceiling 2, the EV charger cable management system 1, 1' provides a flexibility in charging an EV 6 without having to place or relocate the EV 6 to a specific parking spot. For example, the junction box 11 affixed in the location 2C between the two parking spots provides the user the flexibility to charge an EV 6 parked at either parking spot without having to relocate the EV 6 or further adjusting the EV charging cord set 13 for charging.

In addition, by allowing connection capability (e.g., without limitation, the electrical and communications wirings) to the EV charger circuit breaker 4 that can be installed in a remote load panel, when the load panel 5 is remotely located, the EV charger cable management system 1 is not limited by reduced length of the EV charger cable 14. Rather, it allows the user to still utilize the full length of the EV charger cable 14, thereby allowing charging of an EV 6 parked further away from the junction box 11 in a larger EV charging facility (e.g., a commercial parking garage). Furthermore, in an example involving an outdoor EV charging facility in which public foot traffic around an EV 6 may pose a concern, the EV charger cable management system 1 allows for a less to no-space being taken upon on the footpath as shown in Figure 5, thereby preventing damages to the EV charger cord set 13 and eliminating tripping hazards to the public.

Figures 2-2D illustrate an EV charger cable management system 1' in accordance with a non-limiting, example embodiment of the disclosed concept. Figure 2 illustrates the EV charger cable management system 1' located at the location 2A of the ceiling 2. Figure 2A illustrates the EV charger cable management system 1' located at the location 2B of the ceiling 2. Figure 2B illustrates the EV charger cable management system 1' located at the location 2C of the ceiling 2. Figure 2C illustrates an EV 6 being charged using the EV charger cable management system 1' located at the location 2A of the ceiling 2. Figure 2D illustrates a side view of the EV charger cable management system 1' located at the location 2A of the ceiling 2 when no EV 6 is parked in the EV charging facility 10. The EV charger cable management system 1' is similar to the EV charger cable management system 1 of Figures 1-1B, and thus description for the overlapping features is omitted for the sake of brevity. The EV charger cable management system 1' differs from the EV charger cable management system 1 in that it is an active cable management system including a retractor 20 and a cord holder 21.

The retractor 20 includes a fixing component 22, a retractor cord 23 and a cord grip 24. The retractor 20 may be, e.g., without limitation, a spring-loaded device and further include a locking mechanism (not shown) and a core which holds, e.g., without limitation, approximately 8ft of the retractor cord 23. The retractor cord 23 may be, e.g., without limitation, a steel cable. The retractor 20 is structured to be affixed to the ceiling 2 at one end via the fixing component 22 and attached to the retractor cord 23 at another end, grip one end of the majority 29 of the EV charger cord set 13 via the cord grip 24 attached to the retractor cord 23, raise the EV connector 15 to a first height for storage (as shown in Figures 2-2B and 2D) and lower the EV connector 15 to a second height for charging (as shown in Figure 2C). For raising the EV connector 15, the retractor 20 contracts the retractor cord 23 and raises the remaining portion 28 such that the EV connector 15 reaches the first height for storage when the EV connector 15 is not connected to an EV 6. Upon the EV connector 15 reaching the first height, the locking mechanism is structured to lock the retractor cord 23 at a length that allows the EV connector 15 to remain at the first height during storage based on a user input (e.g., without limitation, a pull). For lowering the EV connector 15, the retractor 20 unlocks the locking mechanism based on another user input (e.g., without limitation, another pull), releases the retractor cord 23 upon unlocking and lowers the remaining portion 28 such that the EV connector 15 reaches the second height for charging an EV 6. The first height is variable and determined based on the user needs (e.g., without limitation, the height of the user) and/or preference. It may range, e.g., without limitation, from 1.5m to 2m. The first height may be set at installation by the user to the user's preferred height at which the EV connector 15 is to be suspended off the ground of the EV charging facility 10 when the EV connector 15 is not connected to an EV. The second height depends on the height of the EV 6 and/or the location of the EV connector receptacle 6A , 6B on the EV 6.

The fixing component 22 may be, e.g., without limitation, an eye bolt and structured to affix the one end of the retractor 20 to a portion of the ceiling 2 apart (e.g., without limitation, by a width of an EV) from the part of the ceiling 2 to which the junction box 11 is affixed. The cord grip 24 is attached to an end of the retractor cord 23 and is structured to grip the one end of the remaining portion 28 of the EV charger cord set 13, the remaining portion 28 having the EV connector 15 at another end such that the second portion 28 is ensured to remain overhead free from an unintended contact with the user (e.g., accidentally bumping into the user's head) or the EV 6.

The cord holder 21 includes a fixing component 25 and a strain relief 26. The cord holder 21 is structured to be affixed to the ceiling 2 via the fixing component 25 and maintain the majority 29 of the EV charger cord set 13 to be suspended overhead and out of a path or line of movement of the user or the EV 6 via the strain relief 26. The fixing mechanism 25 may be, e.g., without limitation, an eye bolt, and structured to affix the cord holder 21 to a portion of the ceiling 2 transversely spaced-apart (e.g., without limitation, equidistant) from the junction box 11 and the retractor 20. The strain relief 26 may be a plate (e.g., without limitation, thermoset plate) having an aperture at the top, the aperture being structured to conduit the majority 29 of the EV charger cord set 13 extending from the junction box 11 to the one end of the remaining portion 28 of the EV charger cord set 13 and hold a point of the majority 29 so as to provide a strain relief to the junction box 11 and the retractor 20 by further distributing the stress of holding the EV charger cord set 13 over the plate. The strain relief 26 is further structured to provide a space in which the majority 29 of the EV charger cord set 13 is allowed to rotate or turn so as to prevent the EV charger cord set 13 from binding or becoming entangled.

In operation, the user reaches out and grabs the EV connector 15. The user next unlocks the retractor 20 by exerting a small downward force (e.g., without limitation, a tug or pull) against the retractor 20. Upon receiving the downward force, the retractor 20 unlocks the locking mechanism and releases the retractor cord 23 such that the EV connector 15 is lowered to the second height based on a user input (e.g., without limitation, another tug or pull). The user next connects the EV connector 15 to the EV 6 for charging. Upon completion of the charging, the user then locks the retractor 20 by exciting the downward force again. Upon receiving the downward force, the retractor 20 retracts the retractor cord 23 and raises and maintains the EV connector 15 at the first height until a next charging session.

Thus, each component of the EV charger cable management system 1', i.e., the retractor 20, the cord holder 21 and the junction box 11, ensure that the EV charger cord set 13 is maintained off the ground and isolated from any unintended contact with the user or the EV 6 when the EV connector 15 is not connected to the EV 6, such that potential damages and/or tripping hazards are eliminated.

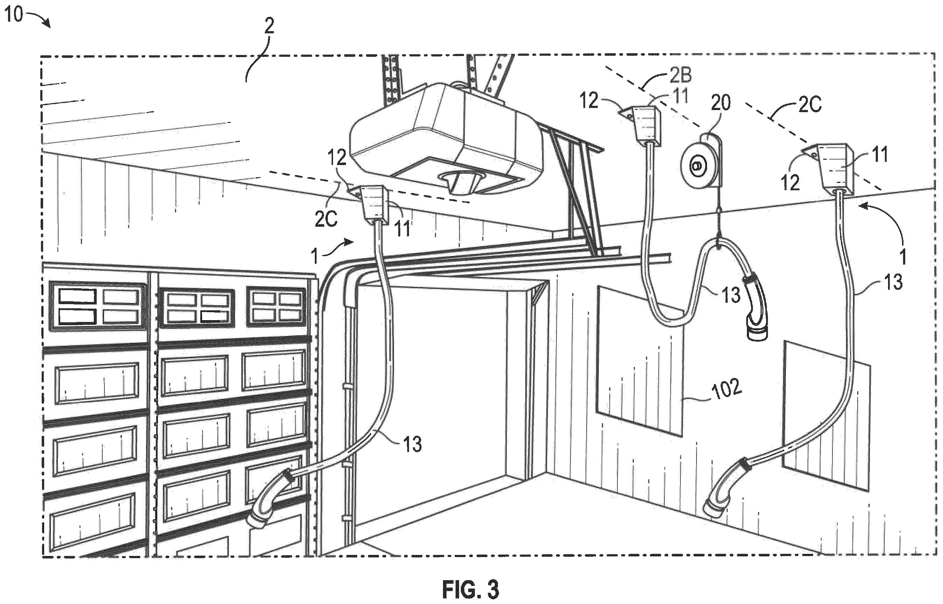

Figure 3 further illustrates a plurality of locations at which an EV charger cable management system 1, 1' can be affixed according to non-limiting, example embodiments of the disclosed concept. Figure 3 shows, as previously shown in Figures 1-2D, the EV charger cable management system 1, 1' can be disposed at any locations (e.g., without limitation, 2A, 2B, 2C) in the ceiling 2 as appropriate.

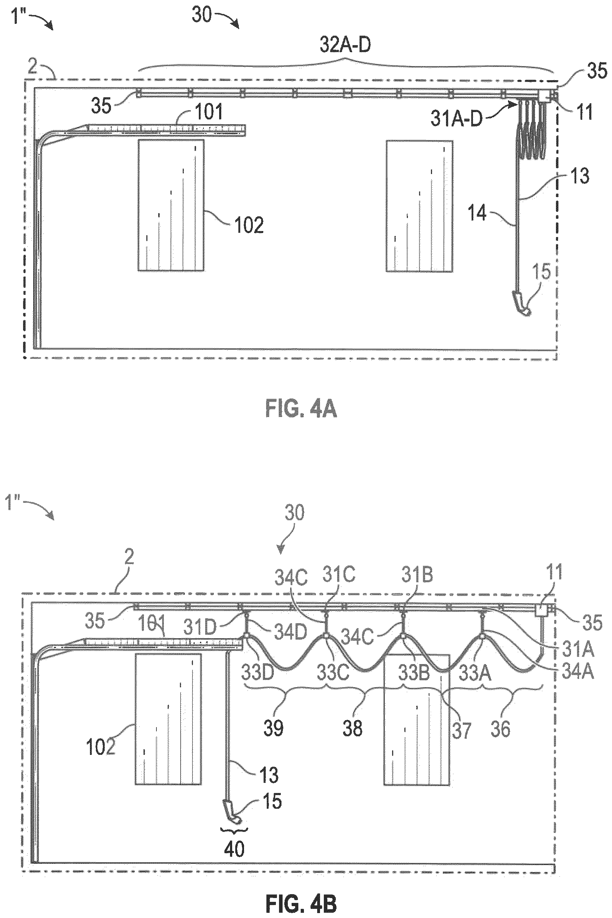

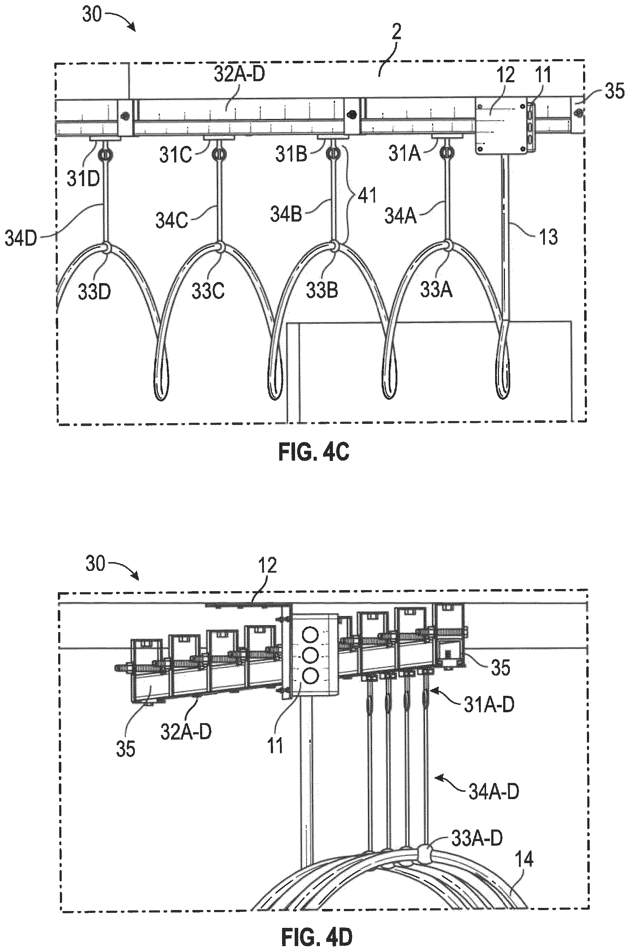

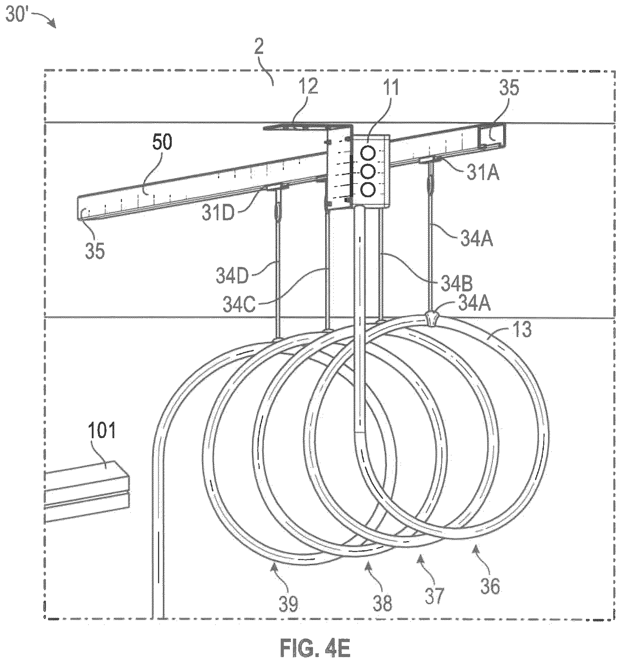

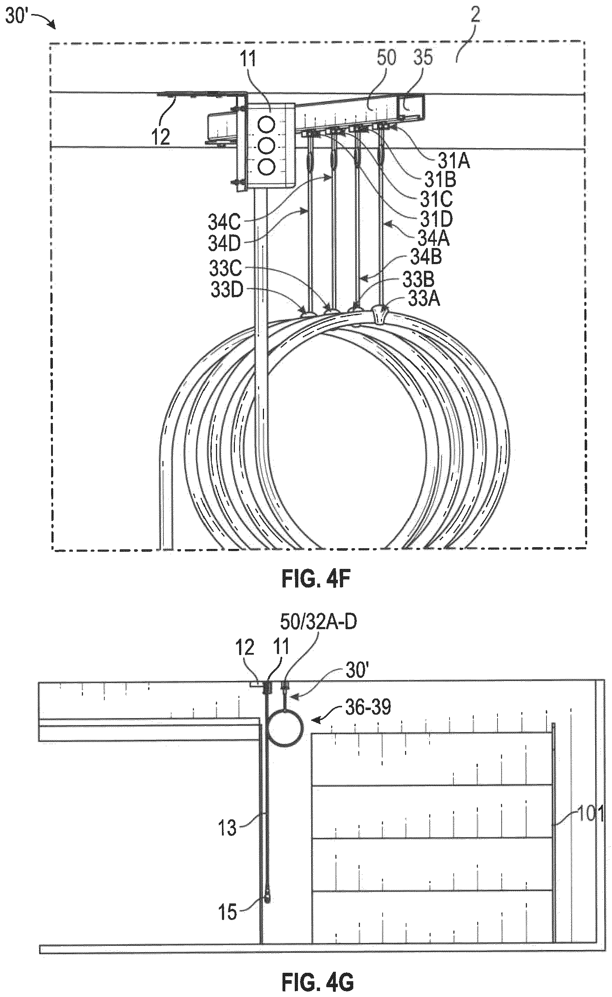

Figures 4A-G illustrate an EV charger cable management system 1" in accordance with non-limiting, example embodiments of the disclosed concept. The EV charger cable management system 1" is similar to the EV charger cable management system 1 of Figure 1, and thus description for the overlapping features is omitted for the sake of brevity. Figure 4A illustrates the EV charger cable management system 1" located at the location 2A of the ceiling 2. Figure 4B illustrates the EV charger cord set 13 of the EV charger cable management system 1" extended toward the garage door 101. Figure 4C illustrates a front view of an extended EV charger cord set 13 of the EV charger cable management system 1' using a trolley mechanism 30. Figure 4D illustrates a perspective view of a coiled EV charger cord set 13 using the trolley mechanism 30. Figure 4E illustrates a perspective view of partially expanded EV charger cord set 13 using another exemplary trolley mechanism 30'. Figure 4F illustrates a perspective view of the coiled EV charger cord set 13 using the other exemplary trolley mechanism 30'. Figure 4G illustrates a rear view of the coiled EV charger cord set 13 of the EV charger cable management system 1‴ disposed at the location 2C between two parking spots of the 2-car garage 10. The EV charger cable management system 1" differs from the EV charger cable management system 1 in that it is an active cable management system including a trolley mechanism 30. The trolley mechanism 30 is structured to maintain the EV charger cord set 13 off the ground at all times. It includes one or more trolleys 31A-D, one or more trolley tracks 32A-D, one or more cord grips 33A-D, one or more holding cords 34A-D, and two end-stops 35. While Figures 4A-G illustrate a trolley mechanism 30 having four trolleys 31A-D, it is for illustrative purposes only and a trolley mechanism 30 may have more or less number of trolleys depending on the user needs and preferences. One or more trolley tracks may include a plurality of trolley tracks 32A-D for respective trolleys 31A-D to ride therethrough or a single track through which all of the trolleys 31A-D may ride. The trolleys 31A-D may suspend from the ceiling 2 via the one or more tracks 32A-D as shown in Figures 4A-D or directly attached to the ceiling 2 via a fixing mechanism 50 as shown in Figures 4E-F. Each trolley track 32A-D is structured to be affixed to the ceiling 2 in a series via fixing components (not shown). Each trolley track 32A-D may be directly mounted to the ceiling 2 via the fixing components. One end of the series of the trolley tracks 31A-D or the single track is affixed adjacent to the junction box 11. Each trolley track 32A-D corresponds to an individual trolley 31A-D and is structured to provide a conduit via which the corresponding trolley 31A-D travels. The individual tracks 32A-D may be joined by a joiner bracket (not shown) if needed. The one or more trolleys 31A-D each include wheels on bearings and are structured to travel away and toward the junction box 11 via corresponding trolley tracks 32A-D.

The one or more holding cords 34A-D each are attached to corresponding trolleys 31A-D at one end and extend downwardly by a length 41. The length 41 may be adjustable by the user. The one or more cord grips 33A-D each are attached to the one or more trolleys 31A-D via corresponding holding cords 34A-D. A cord grip 33A-D may be made of, e.g., without limitation, thermoset. Each cord grip 33A-D is structured to provide an aperture via which the EV charger cord set 13 is looped around and further structured to grip one end of corresponding holding portion 36-39 of the EV charger cord set 1 3. As such, a first trolley 31A holds a first loop formed by the first holding portion 36 and a corresponding cord grip 33A, a second trolley 31B holds a second loop formed by the second holding portion 37 and a corresponding cord grip 33B, a third trolley 31C holds a third loop formed by the third holding portion 38 and a corresponding cord grip 33C, and a fourth trolley 31D holds a fourth loop formed by the fourth holding portion 39 and a corresponding cord grip 33D. The last portion 40 is suspended off the ground such that the EV connector 15 is suspended at a height convenient for charging the EV 6. A holding cord 34A-D may be, e.g., without limitation, a braided nylon rope structured to hold the corresponding holding portion 36-39. Thus, the one or more trolleys 31A-D, the one or more cord grips 33A-D the one or more holding cords 34A-D, and the junction box 11 together hold the majority (the holding portions 36-39) of the EV charger cord set 13 at a predetermined height and maintain the remaining portion of the EV charger cord set including the EV connector 15 suspended off the ground at all times. The predetermined height may be the height at which accidental contacts between the majority of the EV charger cord set 13 and the user or the EV are prevented. It may be set by the user at installation in accordance with the user need or preference.

The one or more trolleys 31A-D are structured to travel via the one or more trolley tracks 32A-D based on a user input. The user input includes, e.g., without limitation, pulling the EV connector 15 or the last portion 40 of the EV charger cord set 13 including the EV connector 15 towards the EV connector receptacle 6A or 6B for charging and pushing the EV connector 15 or the last portion 40 back towards the junction box 11 for storage. As such, in operation, the user reaches out and grabs the last portion 40 or the EV connector 15. The user next pulls the last portion 40 or the EV connector 15 toward the EV connector receptacle 6A or 6B. The one or more trolleys 31A-D travel away from the junction box 11 toward the EV connector receptacle 6A or 6B within respective trolley tracks 32A-D as shown in Figures 4B-C and 4. Optionally, the trolleys 31A-D travel away from the junction box 11 such that each succeeding trolley is spaced-apart equidistant from respective preceding trolley. The user next connects the EV connector 15 to the EV 6 for charging. Upon completion of the charging, the user then disconnects the EV connector 15 from the EV 6 and pushes the last portion 40 or the EV connector 15 back towards the junction box 11. The holding portions 36-39 of the EV charger cord set 13 become coiled together near the junction box 11 and the last portion 40 including the EV connector 15 remains suspended off the ground during storage.

Thus, by positioning the trolley mechanism 30 on the ceiling 2, the EV charger cord set 13 may be coiled up against a side wall (near the junction box 11) for storage in an orderly manner when it is not in use, and extend to the EV connector receptacle 6A or 6B of the EV 6 when it is in use for convenient charging, while keeping the majority of the EV charger cord set 13 suspended overhead and the EV connector 15 off the ground at all times, and thus preventing damage to the EV charger cord set 13 and/or tripping hazards to the user. Further, by allowing the EV charger cable management system 1‴ at any appropriate location, it allows the user the flexibility to charge an EV 6 as parked. For example, by allowing to preferably affix the junction box 11 and the trolley mechanism 30 at the location 2C between the two parking spots within the 2-car garage 10 as shown in Figure 4G, the EV charger cable management system 1"' provides the user the flexibility to charge an EV 6 regardless which parking spot it is parked or in which orientation (backward with the backend facing the garage door or forward with the frontend facing the garage door).

Figure 5 illustrates an EV charger cable management system 1"' for use in an outdoor EV charging facility 10' according to a non-limiting, example embodiment of the disclosed concept. The outdoor EV charging facility 10' may be, e.g., without limitation, an outdoor commercial parking lot. The EV charger cable management system 1‴ is similar to the EV charger cable management system 1 of Figure 1, and thus description for the overlapping features is omitted for the sake of brevity. The EV charger cable management system 1‴ differs from the EV charger cable management system 1 in that the junction box 11 is affixed via the bracket 12 to a portion of an elongated projection (e.g., without limitation, a cantilever) 7 protruding horizontally and outwardly from the top of an EV charging pedestal 8 disposed at the outdoor EV charging facility 10'. As such, the EV charger cable management system 1‴ allows the majority of the EV charger cord set 13 to be suspended overhead and out of a path or line of movement of a user, the public and/or the EV, thereby conveniently and effectively eliminating damages and/or tripping hazards. The junction box 11 may be connected to the EV charger 4 within the pedestal 8 or in an EV charger circuit breaker 4 installed in a remote load center. It may also utilize a passive holding component 17 to hold and store the remaining portion (the minority) of the EV charger cord set 13 including the EV connector 15. While Figure 5 shows the EV charger cable management system 1‴ being similar to the EV charger cable management system 1, it is to be understood that the EV charger cable management system 1', 1" of Figures 1-4G may also be installed on the cantilever 7 as long as the cantilever 7 has sufficient strength and structural capacity to have the EV charger cable management system 1', 1" affixed thereto.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. An electric vehicle (EV) charger cable management system for use at an EV charging facility coupled to a power source via an EV charger, comprising:
an EV charger cord set including an EV connector and an EV charger cable coupled to the EV connector;
a bracket; and
a junction box coupled to the EV charger cable and including electrical wirings, the junction box being structured to electrically connect the EV charger to the EV charger cord set via the electric wirings, be affixed to a portion of top surface of the EV charging facility via the bracket, and maintain a majority of the EV charger cord set to be suspended overhead and out of a path of a user or the EV.

2. The EV charger cable management system of claim 1, further comprising:
a holder structured to be placed on a wall or a pedestal at the EV charging facility and hold a second portion of the EV charger cord set for storage when the EV connector is not connected to an EV for charging.

3. The EV charger cable management system of claim 1, wherein the EV charger is located remotely from the EV charging facility.

4. The EV charger cable management system of claim 1, wherein the junction box affixed to the portion of the top surface of the EV charging facility eliminates damages to the EV charger cord set and/or tripping hazards to the user.

5. The EV charger cable management system of claim 1, wherein the EV charging facility comprises an indoor EV charging facility and the top portion is a ceiling of the indoor EV charging facility, and wherein the junction box is affixed to one of a plurality of locations in the ceiling.

6. The EV charger cable management system of claim 5, further comprising:
a retractor including a fixing component, a retractor cord and a cord grip attached to the retractor cord, the retractor being structured to be affixed to the ceiling at one end via the fixing component and to the retractor cord at another end, grip one end of the majority of the EV charger cord set via the cord grip, raise the EV connector to a first height for storage and lower the EV connector to a second height for charging; and
a cord holder including a fixing component and a strain relief, the cord holder being structured to be affixed to the ceiling via the fixing component, wherein the retractor and the cord holder together maintain the majority of the EV charger cord set to be suspended overhead and out of a path of the user and/or the EV via the strain relief.

7. The EV charger cable management system of claim 6, wherein the retractor further includes a locking mechanism structured to lock the retractor cord at a length that allows the EV connector to remain at the first height during storage based on a user input comprising a downward force exerted against the retractor, wherein the locking mechanism is further structured to unlock the retractor cord based on another user input and release the retractor cord so as to allow lowering of the EV connector to the second height, the user input comprising a downward force exerted against the retractor.

8. The EV charger cable management system of claim 6, wherein the strain relief comprises a plate and structured to provide a strain relief to the junction box and the retractor by distributing the stress of holding the EV charger cord set over the plate.

9. The EV charger cable management system of claim 5, further comprising:
a trolley system structured to maintain the EV charger cord set off the ground of the EV charging facility at all times, the trolley system including one or more trolleys structured to be affixed to the ceiling in a series via fixing components, one or more trolly tracks each including wheels and being structured to travel away and toward the junction box via corresponding trolly tracks, one or more holding cords each attached to corresponding trolleys and extending downwardly, and one or more cord grips each attached to corresponding holding cords and structured to grip ends of corresponding holding portions, wherein the one or more trolleys, the one or more holding cords and the one or more cord grips together hold the majority at a predetermined height and maintain a remaining portion of the EV charger cord set including the EV connector suspended off the ground, wherein the one or more trolleys are structured to travel away from the junction box via the one or more trolley tracks for charging based on a user input comprising a pulling of the EV connector toward the EV, and wherein the one or more trolleys are structured to travel back toward the junction box via the one or more trolley tracks upon completion of the charging based on another user input comprising a push of the EV connector towards the junction box,

10. The EV charger cable management system of claim 9, wherein the trolley system further comprises two end-stops each disposed at ends of the series of the one or more trolley tracks and structured to prevent the one or more trolleys from leaving the one or more trolley tracks.

11. The EV charger cable management system of claim 9, wherein the one or more trolleys are directly affixed to the ceiling via a fixing component or suspended from the ceiling via the one or more trolley tracks.

12. The EV charger cable management system of claim 9, wherein each trolley holds a loop formed by a corresponding holding portion of the EV charger cord and a corresponding cord grip.

13. The EV charger cable management system of claim 1, wherein the EV charging facility comprises an outdoor EV charging facility including an EV charging pedestal and an elongated projection protruding horizontally and outwardly from a top of the EV charging pedestal, and wherein the junction box is structured to be affixed to a portion of the elongated projection.

14. An electric vehicle (EV) charger cable management system for use at an EV charging facility coupled to a power source via an EV charger, comprising:
an EV charger cord set including an EV connector and an EV charger cable coupled to the EV connector;
a bracket;
a junction box coupled to the EV charger cable and including electrical wirings, the junction box being structured to electrically connect the EV charger to the EV charger cord set via the electric wirings and be affixed to a first portion of top surface of the EV charging facility via the bracket;
a retractor including a fixing component, a retractor cord and a cord grip attached to the retractor cord, the retractor being structured to be affixed to a second portion of the top surface at one end via the fixing component and to the retractor cord at another end, grip one end of a majority of the EV charger cord set via the cord grip, raise the EV connector to a first height for storage and lower the EV connector to a second height for charging; and
a cord holder including a fixing component and a strain relief, the cord holder being structured to be affixed to a third portion of the top surface via the fixing component, wherein the junction box, the retractor and the cord holder together maintain the majority of the EV charger cord set to be suspended overhead and out of a path of the user and/or the EV via the strain relief.

15. An electric vehicle (EV) charger cable management system for use at an EV charging facility coupled to a power source via an EV charger, comprising:
an EV charger cord set including an EV connector and an EV charger cable coupled to the EV connector;
a bracket;
a junction box coupled to the EV charger cable and including electrical wirings, the junction box being structured to electrically connect the EV charger to the EV charger cord set via the electric wirings and be affixed to a portion of top surface of the EV charging facility via the bracket; and
a trolley system structured to maintain the EV charger cord set off the ground of the EV charging facility at all times, the trolley system including one or more trolleys structured to be affixed to another portion of the top surface in a series via fixing components, one or more trolly tracks each including wheels and being structured to travel away and toward the junction box via corresponding trolly tracks, one or more holding cords each attached to corresponding trolleys and extending downwardly, and one or more cord grips each attached to corresponding holding cords and structured to grip ends of corresponding holding portions, wherein the one or more trolleys, the one or more holding cords, the one or more cord grips and the junction box together hold a majority of the EV charger cord set at a predetermined height and maintain a remaining portion of the EV charger cord set including the EV connector to be suspended off the ground.
